# EUROPÄISCHE PATENTSCHRIFT

(11) **EP 1 431 057 B1**
(45) Veröffentlichungstag und Bekanntmachung des Hinweises auf die Patenterteilung: **30.05.2007**
(21) Anmeldenummer: 03023011.4
(22) Anmeldetag: 11.10.2003
(51) Int. Cl.: B41M 5/26, C03C 23/00

(54) **Verfahren zum Einbringen einer Markierung in Glas**
Method of introducing markings into glass
Procédé pour marquer du verre dans la masse

(30) Priorität: 16.12.2002 DE 10259006
(43) Veröffentlichungstag der Anmeldung: 23.06.2004
(73) Patentinhaber: Volkswagen Aktiengesellschaft, 38436 Wolfsburg (DE)
(72) Erfinder: Schittek, Bernhard, 38162 Cremlingen (DE); Schütz, Joachim, 38543 Hillerse (DE); Schniete, Horst, 38179 Schwülper (DE)
(74) Vertreter: Basfeld, Rainer

(56) Entgegenhaltungen:
- DD-A- 215 776
- DE-A- 10 118 876
- DE-A- 10 119 302

## Beschreibung

Die Erfindung betrifft ein Verfahren zum Einbringen einer Markierung in Glas, insbesondere in Fensterscheiben aus Glas.

Aus der Druckschrift DE 101 18 876 A1 ist ein Verfahren zur Herstellung von farbigen Markierungen in einem Glas beschrieben. Dazu wird auf das Glas eine Folie aufgebracht. Durch lokale Erwärmung des Glases mittels eines Laserstrahls wird dann ein Ionenaustausch zwischen der Folie und dem Glas bewirkt. Ein ähnliches Verfahren ist aus der Druckschrift DE 101 19 302 A1 bekannt. Diese Druckschrift beschreibt ein Verfahren zum laserstrahlgestützten Eintrag von Metallionen in einem Glas zur Erzeugung von farbigen Pixeln mittels von mit flächig mit Diffusionsfarben bedruckten Folien.

Die beiden aus dem Stand der Technik bekannten und oben genannten Verfahren haben sich in den letzten Jahren nicht durchgesetzt. Ein Grund dafür liegt darin, dass sich die Markierung als nicht dauerhaft erwiesen hat. So konnte durch eine Umkehrung des Ionenaustausch die Markierung beseitigt werden.

Andererseits hat die Verwendung von Folien zum Einbringen einer Markierung in Glas den Vorteil, dass nicht aufwendig Pasten oder Gele oder ähnliches auf das Glas aufgetragen werden müssen, um anschließend nach Vornahme der Markierung wieder abgelöst bzw. abgewaschen zu werden. Die Folie kann mit einfachen Mitteln auf den zu markierenden Bereich des Glases angebracht werden und nach der Durchführung des Markierungsverfahrens von dem Glas abgezogen werden.

Der Erfindung liegt daher die Aufgabe zugrunde, ein einfaches Verfahren zur Markierung von Glas unter der Verwendung von Folien vorzuschlagen.

Diese Aufgabe wird erfindungsgemäß durch ein Verfahren mit den im Anspruch 1 festgelegten Schritten gelöst. Demgemäß wird zunächst eine Folie, welche Farbpigmente aufweist, in dem zu markierenden Bereich am Glas angebracht. Anschließend wird mittels eines Laserstrahls die zu der Folie benachbarte Oberfläche des Glases angeschmolzen. Gleichzeitig lösen sich Farbpigmente von der Folie und werden von der flüssigen Phase des Glases eingeschlossen. Wird nun der Laserstrahl von der Folie bzw. von dem Glas entfernt, erkaltet die flüssige Phase mit den eingeschlossenen Farbpartikeln und die Folie kann von dem markierten Bereich des Glases abgezogen werden.

Gemäß der Erfindung kann der Laserstrahl von einem Neodym-YAG Laser erzeugt werden. Neodym-YAG Laser haben einen hohen Wirkungsgrad und decken einen Wellenlängenbereich ab, nämlich einen im roten an das sichtbare Lichtspektrum angrenzenden Bereich, der für das erfindungsgemäße Verfahren besonders geeignet ist.

Bei dem erfindungsgemäßen Verfahren wird die Oberfläche des Glases bis zu einer Tiefe von 4 µm angeschmolzen. Das Glas wird dabei nur geringfügig zerstört, so dass keine bleibenden Schäden entstehen. Die angeschmolzenen Bereiche des Glases bilden daher keine Ausgangspunkte für Rissbildung oder ähnliches.

Bei dem Glas, welches mittels des erfindungsgemäßen Verfahrens markiert wird, kann es sich beispielsweise, um Verbundsicherheitsglas (VSG) oder Einscheibenglas (ESG) handeln, wie es beispielsweise im Automobilbau verwendet wird.

Gemäß dem erfindungsgemäßen Verfahren, kann die Folie eine Klebstoffschicht aufweisen, mittels welcher die Folie an dem Glas angeklebt wird. Dabei kann bereits die Klebstoffschicht der Folie die Farbpigmente enthalten. Ebenso ist es aber auch möglich, dass die Folie elektrostatisch aufgeladen wird und mittels der elektrostatischen Aufladung an dem Glas angebracht wird.

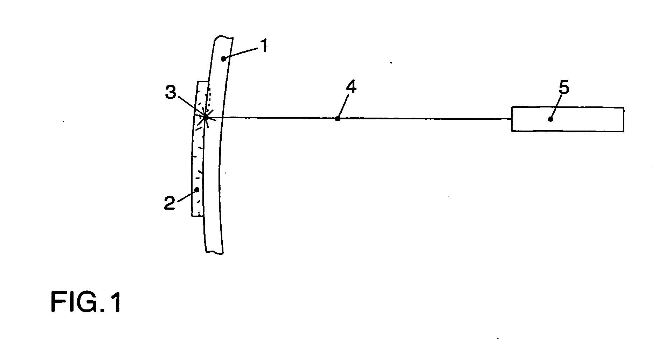

Das erfindungsgemäße Verfahren wird anhand der Zeichnung näher erläutert. Darin zeigt die

Figur die Durchführung des erfindungsgemäßen Verfahrens.

Bei der Durchführung des erfindungsgemäßen Verfahrens gemäß der Figur wird ein von einer Neondym-YAG Lasereinrichtung 5 erzeugter Laserstrahl 4 auf eine Glasscheibe 1 gerichtet. An dieser Glasscheibe ist auf der der Neondym-YAG Lasereinrichtung 5 zugewandten Seite der Glasscheibe 1 mittels statischer Aufladung eine Folie 2 angebracht. In dieser Folie 2 sind Farbpigmente enthalten. Der Fokus 3 des Laserstrahls liegt dabei auf der Oberfläche des Glases 1, welche der Folie 2 zugewandt ist. Dadurch wird die Glasscheibe 1 an dieser Oberfläche angeschmolzen. Dabei werden Farbpigmente aus der Folie 2 herausgelöst und von der flüssigen Phase der angeschmolzenen Glasscheibe 1 aufgenommen. Die Farbpigmente wandern in den Bereichen, in welchen der Laserstrahl 4 bereits auf die Glasscheibe 1 gerichtet war, aus der Folie 2 in die angeschmolzene Oberfläche der Glasscheibe 1 ein. Nach dem Entfernen des Fokus 3 des Laserstrahls 4 erkaltet die flüssige Phase mit den eingeschlossenen Farbpigmenten. Die Farbpigmente sind somit fest mit der Glasscheibe 1 verbunden. Ist die Markierung vollständig in die Glasscheibe 1 eingebracht, kann nun die Folie 2 durch Abziehen von der Glasscheibe 1 gelöst werden. Die Markierung ist dauerhaft in der Glasscheibe 1 eingebracht, wobei die Oberfläche bzw. die Glasscheibe 1 insgesamt nicht so vorgeschädigt ist, dass die angeschmolzenen Bereiche Ausgangspunkte für Risse oder ähnliche Schäden der Glasscheibe 1 bilden können.

### BEZUGSZEICHENLISTE

- 1: Glasscheibe
- 2: Folie
- 3: Fokus
- 4: Laserstrahl
- 5: Lasereinrichtung

## Patentansprüche

1. Verfahren zum Einbringen einer Markierung in Glas (1), insbesondere in Fensterscheiben aus Glas, umfassend folgende Schritte:
- zunächst wird eine Folie (2) mit Farbpigmenten in dem zu markierenden Bereich an dem Glas (1) angebracht;
- dann wird mittels eines Laserstrahls (4) die zu der Folie (2) benachbarte Oberfläche des Glases (1) angeschmolzen;
- dabei werden sich von der Folie (2) lösende Farbpigmente von der flüssigen Phase des Glases (1) eingeschlossen;
- schließlich wird nach dem Entfernern des Laserstrahls (4) die Folie (2) von dem Glas (1) abgelöst.

2. Verfahren nach dem vorhergehenden Anspruch, **dadurch gekennzeichnet, dass** der Laserstrahl (4) von einer Neodym-YAG Lasereinrichtung (5) erzeugt wird.

3. Verfahren nach einem der vorhergehenden Ansprüche, **dadurch gekennzeichnet, dass** die Oberfläche des Glases (1) in einer Tiefe von bis 4 µm angeschmolzen wird.

4. Verfahren nach einem der vorhergehenden Ansprüche, **dadurch gekennzeichnet, dass** das Glas (1) ein Verbundsicherheitsglas (VSG) ist.

5. Verfahren nach einem der vorhergehenden Ansprüche 1 bis 3, **dadurch gekennzeichnet, dass** das Glas (1) ein Einscheibenglas (ESG) ist.

6. Verfahren nach einem der vorhergehenden Ansprüche, **dadurch gekennzeichnet, dass** die Folie (2) eine Klebstoffschicht aufweist, mittels welcher die Folie (2) an dem Glas (1) angeklebt wird.

7. Verfahren nach dem vorhergehenden Anspruch, **dadurch gekennzeichnet, dass** die Klebstoffschicht die Farbpigmente enthält.

8. Verfahren nach einem der Ansprüche 1 bis 5, **dadurch gekennzeichnet, dass** die Folie (2) elektrostatisch aufgeladen wird und mittels der elektrostatischen Aufladung an dem Glas (1) angebracht wird.

## Claims

1. Method for introducing a marking into glass (1), particularly into glass windowpanes, comprising the following steps:
- first, a foil (2) comprising colour pigments is applied in the region to be marked on the glass (1);
- then the surface of the glass (1) next to the foil (2) is melted by means of a laser beam (4) ;
- colour pigments thereby released from the foil (2) are incorporated by the liquid phase of the glass (1);
- lastly, the foil (2) is separated from the glass (1) after removing the laser beam (4).

2. Method according to the preceding claim, **characterized in that** the laser beam (4) is produced by a neodymium-YAG laser device (5).

3. Method according to one of the preceding claims, **characterized in that** the surface of the glass (1) is melted to a depth of up to 4 µm.

4. Method according to one of the preceding claims, **characterized in that** the glass (1) is a composite safety glass (CSG).

5. Method according to one of the preceding Claims 1 to 3, **characterized in that** the glass (1) is a single-pane glass (SPG).

6. Method according to one of the preceding claims, **characterized in that** the foil (2) comprises an adhesive layer, by means of which the foil (1) is adhesively bonded on the glass (1).

7. Method according to one of the preceding claims, **characterized in that** the adhesive layer contains the colour pigments.

8. Method according to one of the preceding Claims 1 to 5, **characterized in that** the foil (2) is electrostatically charged, and is applied on the glass (1) by means of the electrostatic charge.

## Revendications

1. Procédé pour apporter un repère dans du verre (1), en particulier dans une vitre en verre, lequel procédé comprend les étapes suivantes :
- tout d'abord, on applique dans la zone à repérer sur le verre (1) une feuille (2) dotée de pigments colorés,
- ensuite, au moyen d'un faisceau laser (4), on fond la surface du verre (1) au voisinage de la feuille (2),
- ainsi, les pigments colorés qui se détachent de la feuille (2) sont incorporés dans la phase liquide vers (1) et
- finalement, après suppression du faisceau laser (4), on détache la feuille (2) du verre (1).

2. Procédé selon la revendication précédente, **caractérisé en ce que** le faisceau laser (4) est créé par un dispositif laser au néodyme-YAG (5).

3. Procédé selon l'une des revendications précédentes, **caractérisé en ce que** la surface du verre (1) est fondue à une profondeur qui peut aller jusque 4 µm.

4. Procédé selon l'une des revendications précédentes, **caractérisé en ce que** le verre (1) est un verre feuilleté de sécurité ("Verbundsicherheitsglas" - VSG).

5. Procédé selon l'une des revendications 1 à 3 qui précèdent, **caractérisé en ce que** le verre (1) est un verre pour vitre simple ("Einscheibenglas" - ESG).

6. Procédé selon l'une des revendications précédentes, **caractérisé en ce que** la feuille (2) présente une couche d'adhésif par lequel la feuille (2) est collée sur le verre (1).

7. Procédé selon la revendication qui précède, **caractérisé en ce que** la couche d'adhésif contient des pigments colorés.

8. Procédé selon l'une des revendications 1 à 5, **caractérisé en ce que** la feuille (2) est chargée électrostatiquement et est appliquée sur le verre (1) au moyen de sa charge électrostatique.
